# EUROPEAN PATENT APPLICATION

(11) **EP 2 706 469 A1**
(43) Date of publication of application: **12.03.2014**
(21) Application number: 13004259.1
(22) Date of filing: 29.08.2013
(51) Int. Cl.: G06F 17/30

(54) **Online content collection**

(30) Priority: 30.08.2012 US 201213599310
(71) Applicant: Accenture Global Services Limited, Dublin 4 (IE)
(72) Inventor: Figg, Matthew, Adelaide, SA 5090 (AU); Holman, Jarred, Wynn Vale, SA 5127 (AU)
(74) Representative: Müller-Boré & Partner Patentanwälte PartG mbB

(57) **Abstract**

An online content collection system includes a scanning server to scan web sites to retrieve a potential creative uniform resource locator (URL). The scanning and retrieving includes parsing web pages for the web sites, identifying a potential creative URL from the parsed web pages that matches a predetermined criterion for retrieving potential creative URLs, and retrieving the potential creative URL that matches the predetermined criterion. A data storage may be used to store URLs for creatives. An online content collection server analyzes the retrieved potential creative URL by determining whether the retrieved potential creative URL has been seen before by comparing the retrieved potential creative URL against the creative URLs stored in the data storage, and determining whether the retrieved potential creative URL points to a creative if the retrieved potential creative URL has been seen before.

## Description

### BACKGROUND

Online advertising typically includes posting advertisements (ads) on the Internet. The online ads may include a marketing message, and a user may be able to click on the ad, which typically takes the user to another web page for a product or service being marketed in the ad. Online ads may be designated as creatives that include, for example, images, click thrus, FLASH objects, etc. An online ad may be provided in the form of a banner ad, which is an ad embedded in a web page and often includes text, images, video, sound or any combination of those elements.

Placement of a creative on a particular web site may be purchased from an ad service or an ad network, referred to as ad vendors. For example, search engines typically offer ad services whereby an advertiser pays to have their creatives posted on the search engine web site or other affiliated web sites. Many web sites, in addition to search engines, offer similar services for posting creatives for companies or other entities.

In many instances, the creatives are required to be posted for a certain period of time and are required to be posted in certain locations on a web site or may be required to be posted in response to certain conditions being met. Many entities engage in sophisticated online advertising campaigns where they are competing against competitors for creative space and they are placing many creatives across many web sites. It is difficult to efficiently track the web sites to determine whether the web sites are posting their creatives, and whether the creatives include the proper content and are provided in the proper web page and in the proper location on the web page.

### BRIEF DESCRIPTION OF DRAWINGS

Features of the present disclosure are illustrated by way of examples and not limited in the following figure(s), in which like numerals indicate like elements, in which:

Figure 1 illustrates a data flow diagram for an online content collection system, according to an example of the present disclosure;

Figure 2 illustrates a system diagram for the online content collection system, according to an example of the present disclosure;

Figure 3 illustrates a flow chart for a method for creative uniform resource locator (URL) and click thru processing by the online content collection system, according to an example of the present disclosure;

Figure 4 illustrates a flow chart for a method for creative download and storage in a database or an online content collection server, according to an example of the present disclosure;

Figure 5 illustrates a flow chart for a method for click thru download and storage in the database or the online content collection server, according to an example of the present disclosure; and

Figure 6 illustrates a computer system that may be used for the methods and systems, according to an example of the present disclosure.

### DETAILED DESCRIPTION

For simplicity and illustrative purposes, the present disclosure is described by referring mainly to examples. In the following description, numerous specific details are set forth in order to provide a thorough understanding of the present disdosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

According to an example, an online content collection system is disclosed herein to detect, process and store creatives and associated creative URLs and click thrus. A creative may be defined as online content and may include any type of image, click thru, FLASH object, video, etc. For example, the creative, which may be an online ad that includes, for example, images, click thrus, FLASH objects, etc., may be used to provide a message on a web site. For example, an online ad for computers that includes computer images, click thrus to a seller's website, and/or FLASH objects related to computers, etc., may be used to provide a message on a general web site (e.g., a news website). The message in the creative is typically a marketing message promoting products or services, which may be offered for sale. A click thru URL for a creative may be clicked on by a user, which may take the user to the product web site or another web site promoting the product or service. The creative URL may be defined as a particular URL associated with the image, click thru, FLASH object, etc., for the creative. A potential creative URL may be defined as a URL that may or may not be a creative URL. The creatives, URLs and click thrus may be used for subsequent analysis, for example, for generating reports.

According to an example, the online content collection system may include a scanning server to scan web sites to retrieve a potential creative uniform resource locator (URL). The scanning and retrieving includes parsing web pages for the web sites, identifying a potential creative URL from the parsed web pages that matches a predetermined criterion for retrieving potential creative URLs, and retrieving the potential creative URL that matches the predetermined criterion. A data storage may be used to store creative URLs. An online content collection server analyzes the retrieved potential creative URL by determining whether the retrieved potential creative URL has been seen before by comparing the retrieved potential creative URL against the creative URLs stored in the data storage, and determining whether the retrieved potential creative URL points to a creative if the retrieved potential creative URL has been seen before.

According to an example, a method for online content collection includes scanning web sites to retrieve a potential creative URL, retrieving the potential creative URL that matches a predetermined criterion for retrieving potential creative URLs, determining whether the retrieved potential creative URL has been seen before by comparing the retrieved potential creative URL against previously validated creative URLs, and determining whether the retrieved potential creative URL points to a creative if the retrieved potential creative URL has been seen before.

According to an example, a non-transitory computer readable medium including computer code that when executed by a computer system performs instructions including scanning web sites to retrieve a potential creative URL, retrieving the potential creative URL that matches a predetermined criterion for retrieving potential creative URLs, determining whether the retrieved potential creative URL has been seen before by comparing the retrieved potential creative URL against previously validated creative URLs, determining whether the retrieved potential creative URL points to a creative if the retrieved potential creative URL has been seen before, and downloading a creative that the retrieved potential creative URL points to if the retrieved potential creative URL has not been seen before.

For the online content collection system described above, the predetermined criterion includes using a regular expression to match the potential creative URL. The analysis by the online content collection server further includes removing query parameters before determining whether the retrieved potential creative URL has been seen before. The analysis also includes downloading a creative that the retrieved potential creative URL points to if the retrieved potential creative URL has not been seen before.

For the online content collection system described above, if the retrieved potential creative URL points to a creative, the analysis further includes determining whether the online content collection server recognizes a click thru URL associated with the creative. If the online content collection server does not recognize the click thru URL associated with the creative, the analysis further includes determining whether a web page content associated with the creative includes a click thru URL. If the web page content associated with the creative includes a click thru URL, the analysis further includes downloading the click thru URL in a web browser environment, and determining whether the click thru URL is a redirected URL. The analysis further includes determining whether the redirected URL has been seen before if the click thru URL is a redirected URL, indicating the click thru URL as being invalid if the redirected URL has been seen before, and downloading a subsequent redirected URL to determine whether the subsequent redirected URL is another redirected URL if the redirected URL has not been seen before. The analysis further includes determining whether the click thru URL is a HTML redirect if the click thru URL is not a redirected URL, storing the click thru URL in the data storage if the click thru URL is not a HTML redirect, and determining whether the HTML redirect has been seen before if the click thru URL is a HTML redirect.

For the online content collection system described above, if the retrieved potential creative URL does not point to a creative, the analysis further includes determining whether the retrieved potential creative URL with query parameters has been seen before.

For the online content collection system described above, the analysis further includes determining whether the retrieved potential creative URL is a redirected URL if the retrieved potential creative URL has not been seen before. The analysis further includes determining whether the redirected URL has been seen before if the retrieved potential creative URL is a redirected URL, indicating the creative associated with the retrieved potential creative URL as being invalid if the redirected URL has been seen before, and downloading a subsequent redirected URL to determine whether the subsequent redirected URL is another redirected URL if the redirected URL has not been seen before. The analysis further includes determining whether a creative associated with the retrieved potential creative URL is a FLASH object or an image if the retrieved potential creative URL is not a redirected URL, determining whether a width and a height of the FLASH object or the image exceed a predetermined threshold if the creative associated with the retrieved potential creative URL is a FLASH object or an image, and indicating the creative associated with the retrieved potential creative URL as being invalid if the creative associated with the retrieved potential creative URL is not a FLASH object or an image. The predetermined threshold may be set at five pixels. The analysis further includes indicating the creative associated with the retrieved potential creative URL as being valid if the width and the height of the FLASH object or the image exceed the predetermined threshold, and storing the retrieved potential creative URL in the data storage for comparison with further retrieved potential creative URLs.

Technical problems for which the examples provide technical solutions include how to identify and capture creatives and click thrus from the Internet. Also, once potential creatives and click thrus are captured, a technical problem is how to determine if the creatives or click thrus are valid. Another technical problem is to determine how to efficiently capture creatives and click thrus. According to an example, the online content collection system is operable to retrieve and analyze creative URLs to determine if creatives that the creative URLs point to have been previously analyzed by the online content collection system. If the creatives or associated click thrus have been previously analyzed, the online content collection system uses results from the previous analysis to analyze new potential creative URLs to thus eliminate redundant analysis. The online content collection system is also operable to analyze the validity of a creative and associated click thrus before storage in a database.

In order for the online content collection system to scan and detect creatives and associated click thrus, in one example, a scan server cloud is used to scan web sites dispersed over a wide geographic area. The scanning may be performed for a predetermined set of web sites, which are identified by a client, or for a much larger group of web sites, or for both a predetermined set and for a much larger group of web sites.

The online content collection system includes fail over capability if a scan server in the a scan server cloud is offline. If a website in a pool of websites stops detecting creatives, the online content collection system indicates an error for the given website, thus eliminating the need for analysis for such inoperable websites. The online content collection system also provides for detection of creatives inside lframes of a web page. Iframes are embedded HTML documents in a web page. Iframes may be scanned recursively if an Iframe contains another Iframe.

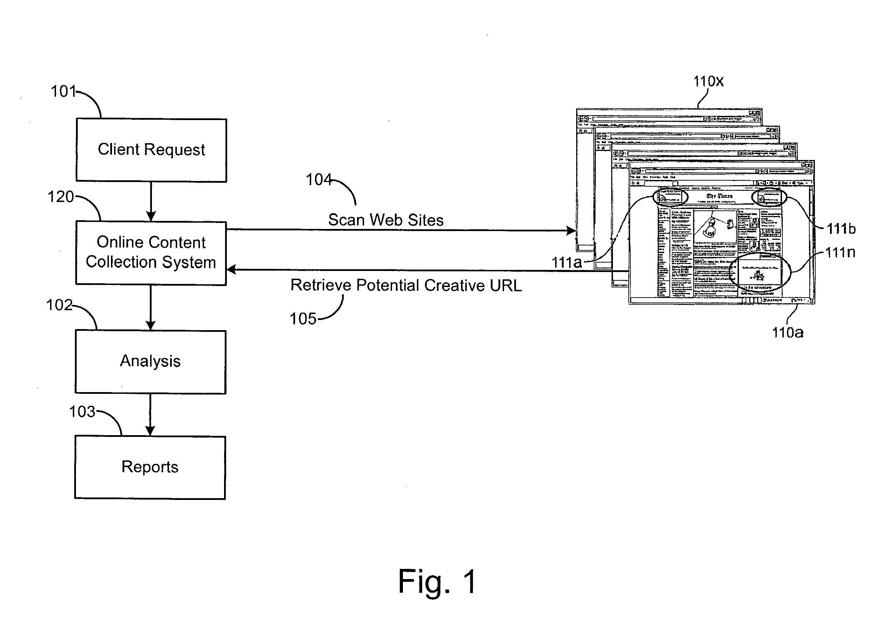

Figure 1 illustrates a high-level data flow diagram for the online content collection system 120. At block 101, the online content collection system 120 receives a client request that may include a list of all the web sites in which the client's ads (i.e., creatives) are supposed to be posted. At block 102, the client request may also include the type of analysis desired. For example, as described in U.S. patent application serial number 13/455,885, entitled "Online Content Campaign Classification", which is incorporated by reference in its entirety, the client may be interested in a competitor analysis, a cost analysis, or a benchmarking analysis. The competitor analysis evaluates the client's ad campaign relative to a predetermined set of competitors based on metrics. The cost analysis evaluates the client's ad campaign effectiveness versus cost. The benchmark analysis may analyze the presence of the client's ads, such as whether they are delivered, whether the ads are in the proper page location and have the proper content, frequency of occurrence, such as number of ads posted on the web page or web site, uniqueness of images in ads, and trends. At block 103, various reports may be generated based on the analysis at block 102. For example, the reports may include competitor analysis reports, cost analysis reports, or benchmarking analysis reports.

At 104, the online content collection system 120 scans the Internet to capture creative URLs for a client's ad campaign. The scan may cover the set of web sites provided by the client or a larger search space. Figure 1 shows web pages 110a-x, including creatives 111a-n.

At 105, the online content collection system 120 retrieves a potential creative URL from the content of one of the web pages 110a-x. The URL retrieved may represent a creative or a beacon representing a creative. A beacon, also referred to as a web beacon, is code for a web page that is able to retrieve information from another server. The beacon may be a unique identifier or include a unique identifier for the creative or client. The beacon may be coded in hypertext markup language (HTML), JAVA script, FLASH, etc., and is identifiable by parsing the code of a web page.

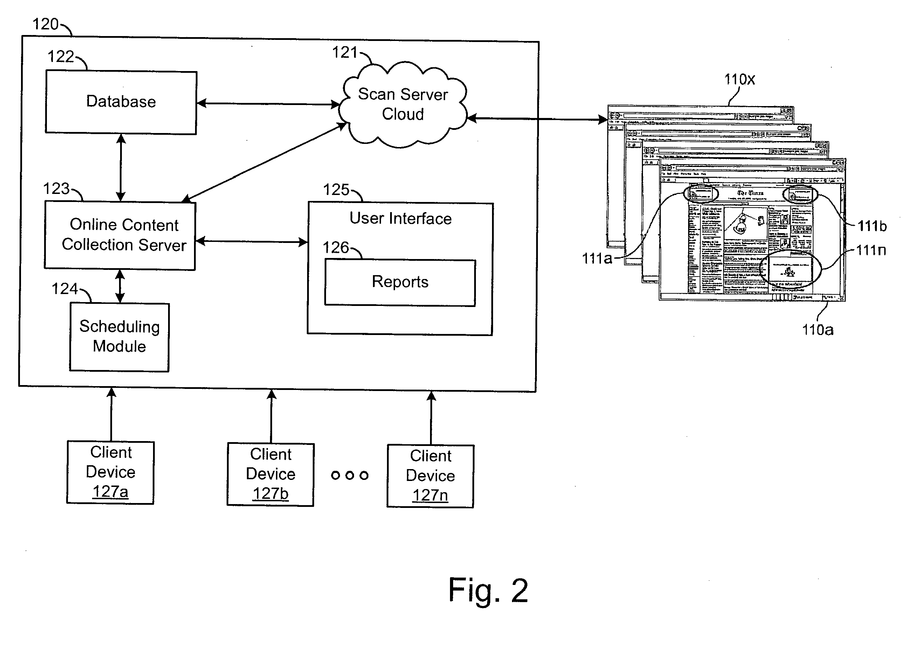

Figure 2 illustrates a more detailed block diagram of the online content collection system 120. The online content collection system 120 includes a scan server cloud 121, a database 122, online content collection server 123, and scheduling module 124. The scan server cloud 121 includes multiple scan servers placed at different locations around the world to provide scalable website scanning and analysis. Each scan server scans a specific set of websites. For example, one scan server in the scan server cloud 121 may be responsible for scanning web pages 110a-x which are geographically hosted near the scan server. Other servers scan other geographic areas. Together the scan server cloud 121 covers all sites requested by a client for analysis. The database 122 stores creatives, creative URLs, click thrus, beacons, website structure data, ad metrics and any other information received from the scanning performed by the scan server cloud 121. Alternatively, the information stored in the database 122 may be stored in the online content collection server 123. The database 122 or another database stores client information, so the ad information determined from the scanning can be matched to the client information.

The online content collection server 123 receives and compiles information from the scan server cloud 121. This includes potential creative URLs from web page content. The scan severs of the scan server cloud 121 may detect creatives in the set of web sites provided by the client or a larger search space. For the creatives detected, the scan servers detect the URL of each creative. The online content collection server 123 may further match the scanned creative information and client information stored in the database 122. The matching associates the scanned creative information to the corresponding client. The online content collection server 123 also uses the scanned information to classify online creatives into creative campaigns.

The online content collection server 123 also generates reports, which may be compiled from the attributes and metrics for the client's ads captured during the scan performed by the scan server cloud 121. The reports may be displayed at user interface 125 as reports 126. The user interface 125 may be a graphical user interface (GUI) that allows users to dynamically search their advertising statistics, reports for viewing and information related to creatives. The user interface 125 may be provided through a web page, where the user can login and view the desired information. In addition to viewing reports, users may interact with the online content collection system 120 to view or provide different information, including websites for scanning, etc. Client devices 127a-n, such as laptops, desktops, cellular phones, etc., may be connected, e.g., via a network, to the online content collection system 120 to interact with the system for example via the user interface 125.

The scheduling module 124 may provide periodic scanning of websites provided by a client. The scan frequency or interval may be determined to match the client's needs. For example, one client may require scans at short intervals, such as every 10 minutes for one hour, and repeated twice daily. This type of scan interval will capture a large sample set of potential creative URLs in web sites being scanned. Another client may not need short interval scans. For example, one or two scans daily may be performed for potential creative URL retrieval. The scan server cloud 121 shown in Figure 2 provides the flexibility to modify scan frequencies and areas or web sites to be scanned. The scan server cloud 121 is configured to receive requested scan frequencies and web site lists or scan regions for a client and retrieve potential creative URLs from the scans.

As described herein, the modules and other elements of the system 120 may comprise machine readable instructions stored on a non-transitory computer readable medium. In addition, or alternatively, the modules and other elements of the system 120 may comprise hardware or a combination of machine readable instructions and hardware.

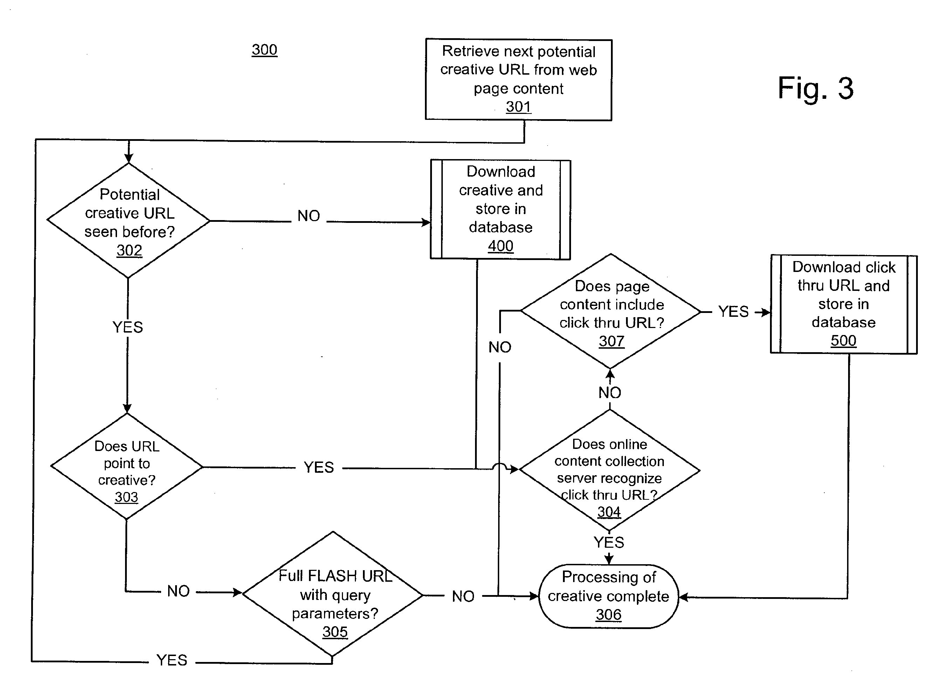

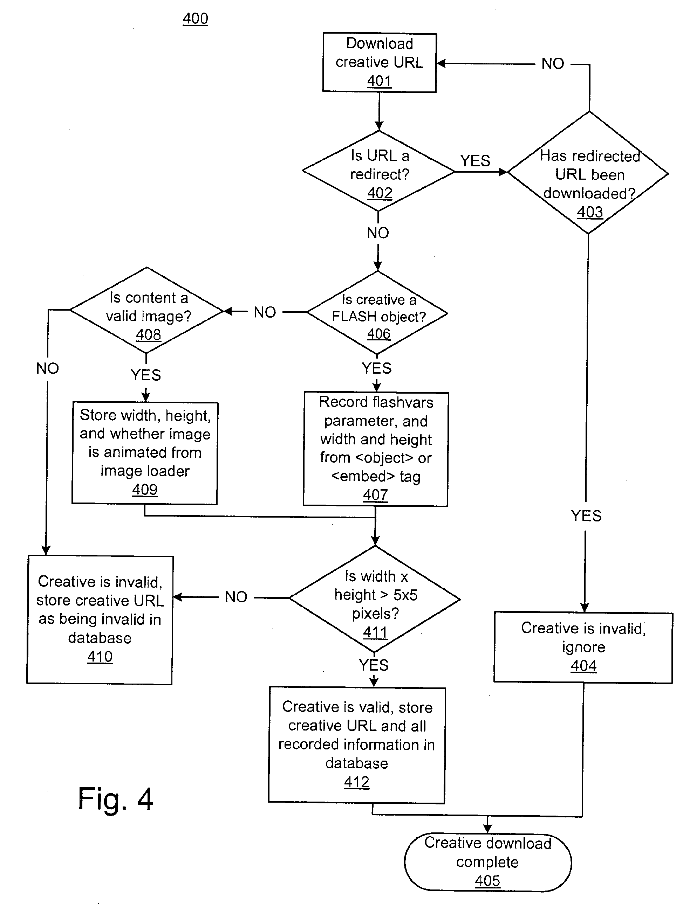

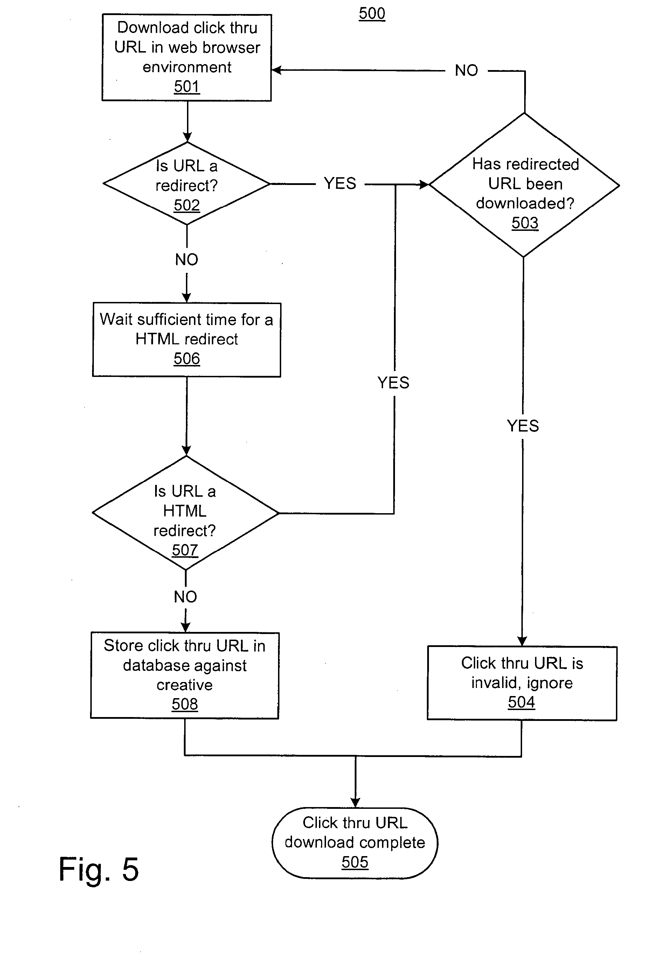

Figure 3 illustrates a flow chart of a method 300 for creative URL and click thru processing during scanning by the online content collection system 120. The method 300, and further, the methods 400 and 500 described with reference to Figures 4 and 5, respectively, may be implemented on the online content collection system 120 with reference to Figures 1 and 2 by way of example and not limitation. The methods 300, 400 and 500 may be practiced in other systems. The scan servers in the scan server cloud 121 shown in Figure 2 may use the method 200 to perform the scanning and retrieval of potential creative URLs as described herein.

Referring to Figure 3, at block 301, the scan servers in the scan server cloud 121 retrieve a next potential creative URL from web page content. The scan severs may detect creatives in the set of web sites provided by the client or a larger search space. For the creatives detected, the scan servers detect the URL of each creative. For FLASH URLs, the query parameters are removed. The query parameters generally include random numbers that identify a user. Removing the query parameters thus eliminates duplication of URLs that are stored in the database 122 and redundant analysis of duplicate URLs by the online content collection server 123. The scan servers in the scan server cloud 121 may detect creatives by loading web pages 110a-x into a web browser. The source code of the web pages 110a-x may be evaluated to locate images that match regular expressions that are specified for retrieving creative URLs. For example, a regular expression may specify that any URL associated with domain abcclick.net may be located and retrieved for further determining whether the URL points to an image or a FLASH object that is a potential creative.

At block 302, the online content collection server 123 determines if the potential creative URL has been seen before. If the potential creative URL has not been seen before, the creative represented by the potential creative URL may be downloaded and stored in the database 122. Alternatively, the creative represented by the potential creative URL may be downloaded and stored in the online content collection server 123. Downloading and storage of a creative represented by the potential creative URL in the database 122 may be performed by the method represented by block 400, described in further detail with reference to Figure 4.

If the potential creative URL has been seen before at block 302, at block 303, the online content collection server 123 determines if the potential creative URL in fact points to a creative. Based on a comparison with creative URLs stored in the database 122 to determine whether the creative URL in fact points to a creative, if the creative URL points to a creative, the online content collection server 123 obtains information, such as, md5sum, file size, creative type, image size, image height, image width, and the click thru URL for the creative URL. The information for the creative URL is sent to block 304, where a determination is made whether the online content collection server 123 recognize the click thru URL associated with the potential creative URL. The determination made at block 304 is described in further detail below.

At block 305, if the online content collection server 123 determines that the potential creative URL does not point to a creative, a determination is made whether the potential creative URL is a full FLASH URL with query parameters. If the potential creative URL is a full FLASH URL with query parameters, the online content collection server 123 reverts to block 302 to determine if the full FLASH URL with query parameters has been seen before. If the full FLASH URL with query parameters has not been seen before, the creative represented by the full FLASH URL with query parameters may be downloaded and stored in the database 122 by the method represented by block 400. If the full FLASH URL with query parameters has been seen before at block 302, at block 303, the online content collection server 123 determines if the full FLASH URL with query parameters in fact points to a creative. Based on a comparison with creative URLs stored in the database 122 to determine whether the full FLASH URL with query parameters in fact points to a creative, if the full FLASH URL with query parameters points to a creative, the online content collection server 123 obtains information, such as, md5sum, file size, creative type, image size, image height, image width, and the click thru URL for the full FLASH URL with query parameters. The information for the full FLASH URL with query parameters is sent to block 304, where a determination is made whether the online content collection server 123 recognize the click thru URL associated with the potential creative URL (i.e., the full FLASH URL with query parameters). Alternatively, at blocks 303 and 305, if the online content collection server 123 determines that the full FLASH URL with query parameters does not point to a creative, at block 306, processing of the creative is complete.

Referring to block 304, a determination is made whether the online content collection server 123 recognize the associated click thru URL for the potential creative URL, which may be a full FLASH URL with query parameters. If the online content collection server 123 recognizes the associated click thru URL, processing of the creative is complete at block 306. Alternatively, if the online content collection server 123 does not recognize the associated click thru URL, at block 307, a determination is made whether the current web page includes a click thru URL. If the current web page does not include a click thru URL, processing of the creative is complete at block 306. Alternatively, if the current web page includes a click thru URL, the click thru URL may be downloaded and stored in the database 122. Alternatively, the click thru URL may be downloaded and stored in the online content collection server 123. Downloading and storage of a click thru URL in the database 122 or the online content collection server 123 may be performed by the method represented by block 500, described in further detail with reference to Figure 5.

Referring to block 400, once the creative represented by the potential creative URL, which may be the full FLASH URL with query parameters, is downloaded and stored by the method represented by the block 400, at block 304 a determination is made whether the online content collection server 123 recognize the associated click thru URL for the potential creative URL. As discussed above with reference to block 304, if the online content collection server 123 recognizes the associated click thru URL, processing of the creative is complete at block 306. Alternatively, if the online content collection server 123 does not recognize the associated click thru URL, at block 307, a determination is made whether the current web page includes a click thru URL. If the current web page does not include a click thru URL, processing of the creative is complete at block 306. Alternatively, if the current web page includes a click thru URL, the click thru URL may be downloaded and stored in the database 122 or the online content collection server 123 by the method represented by the block 500.

Figure 4 illustrates a flow chart of the block 400 (i.e., method 400) for creative download and storage in the database 122 or the online content collection server 123. Referring to Figures 3 and 4, in order to download and store a creative represented by the potential creative URL, which may be the full FLASH URL with query parameters, for the method represented by the block 400 of Figure 1, at block 401, the creative URL is downloaded from its web server. The scan servers in the scan server cloud 121 may download the creative URL from its web server.

At block 402, a determination is made whether the URL is a redirect. If the URL is a redirect, at block 403, a determination is made whether the redirected URL has been downloaded. In other words, at block 403, a determination is made whether the redirected URL has been seen before. At block 403, the online content collection server 123 checks the database 122 to determine if the redirected URL has been downloaded before. If the redirected URL is determined to be previously downloaded at block 403, this means that the redirect is a circular redirect and the URL is invalid. Therefore, at block 403, if the redirected URL is determined to be previously downloaded, at block 404, the redirected URL, and thus the creative, is determined to be invalid, and at block 405, download and storage of the creative is complete. This evaluation at block 403 avoids infinite looping of a redirected URL. If at block 403 a determination is made that the redirected URL has not been previously downloaded, the online content collection server 123 reverts back to block 401 to download a subsequent redirected URL. In this manner, for redirected URLs that have not been previously downloaded, the online content collection server 123 loops between blocks 401, 402 and 403 to download subsequent redirected URLs, until a determination is made that the URL is not a redirect at block 402 or the redirected URL has been previously downloaded at block 403, at which time the online content collection server 123 proceeds to block 404 and then to block 405 where download and storage of the creative is completed.

At block 402, if a determination is made that the URL is not a redirect, at block 406, a determination is made whether the URL points to a creative that is a FLASH object. For example, if the URL points to a creative that has an image-file format that is a joint photographic experts group (JPEG), a portable network graphics (PNG), or a graphics interchange format (GIF), the creative is not a FLASH object. Alternatively, if the URL points to a creative that has an object tag or an embed tag, than the creative is determined to be a FLASH object. In this case, at block 407, if the creative is determined to be a FLASH object, the flashvars parameter, and the width and height of the FLASH object from the <object> or <embed> tag are recorded for the FLASH object.

Referring to block 408, if at block 406 a determination is made that the URL does not point to a creative that is a FLASH object, then the creative is determined to likely be an image. At block 408, if the creative is determined to likely be an image, a determination is made whether the downloaded creative URL points to content that is a valid image. The validity of the image may be determined by an image loading component of the online content collection server 123, for example, by loading the image. If the image loads properly (i.e., without errors), at block 409, information such as the image width, the image height and whether the image is animated is stored in the database 122 or the online content collection server 123. If at block 408 a determination is made that the downloaded creative URL does not point to content that is a valid image, at block 410, the creative is determined to be invalid and the creative URL is stored as being invalid in the database 122 or the online content collection server 123. In this manner, referring to block 302 of Figure 3, the creative URL stored at block 410 can be used to determine if other potential creative URLs have been seen before.

Referring to blocks 407 and 409, after recordation of the flashvars parameter, and the FLASH object width and height from the <object> or <embed> tag at block 407, or storage of the image width, the image height and whether the image is animated at block 409, at block 411, the width and height of the creative is evaluated. At block 411, if the width and height of the creative is determined to be greater than a predetermined threshold of 5 pixels each (i.e., width x height > 5 x 5 pixels), then at block 412, the creative is determined to be valid and the creative URL and all recorded information is stored in the database 122 or the online content collection server 123. In this manner, referring to block 303 of Figure 3, the creative URL stored at block 412 can be used to determine if other potential creative URLs, which may be full FLASH URLs with query parameters, in fact point to a creative. If the width and height of the creative is determined to be less than or equal to the predetermined threshold of 5 pixels each (i.e., width x height < 5 x 5 pixels), then at block 410, the creative is determined to be invalid and the creative URL is stored as being invalid in the database 122 or the online content collection server 123. Thus the online content collection server 123 eliminates beacons, which can have a width and height of 1 pixel, and other images or FLASH objects that have a width and height that is determined to be less than or equal to the predetermined threshold of 5 pixels each as being valid creatives. With the creative URL stored at block 412, at block 405, download and storage of the creative is complete.

Figure 5 illustrates a flow chart of the block 500 (i.e., method 500) for click thru download and storage in the database 122 or the online content collection server 123. Referring to Figures 3 and 5, in order to download and store a click thru URL associated with the potential creative URL or the full FLASH URL with query parameters, for the method represented by the block 500 of Figure 1, at block 501, the click thru URL is downloaded in a web browser environment. The scan servers in the scan server cloud 121 may download the click thru URL.

At block 502, a determination is made whether the click thru URL is a redirect. If the click thru URL is a redirect, at block 503, a determination is made whether the redirected URL has been downloaded. In other words, at block 503, a determination is made whether the redirected URL has been seen before. At block 503, the online content collection server 123 checks the database 122 to determine if the redirected URL has been downloaded before. If the redirected URL is determined to be previously downloaded at block 503, this means that the redirect is a circular redirect and the URL is invalid. Therefore, at block 503, if the redirected URL is determined to be previously downloaded, at block 504, the redirected URL, and thus the click thru URL, is determined to be invalid, and at block 505, download and storage of the click thru URL is complete. This evaluation at block 503 avoids infinite looping of a redirected URL. If at block 503 a determination is made that the redirected URL has not been previously downloaded, the online content collection server 123 reverts back to block 501 to download a subsequent redirected URL. In this manner, for redirected URLs that have not been previously downloaded, the online content collection server 123 loops between blocks 501, 502 and 503 to download subsequent redirected URLs, until a determination is made that the URL is not a redirect at block 502 or the redirected URL has been previously downloaded at block 503, at which time the online content collection server 123 proceeds to block 504 and then to block 505 where download and storage of the click thru URL is completed.

At block 502, if a determination is made that the URL is not a redirect, at block 506, the online content collection server 123 waits a predetermined time interval, such as, three seconds, for a HTML redirect. At block 507, if a determination is made that a HTML redirect has occurred within the predetermined time interval, the online content collection server 123 proceeds to block 503 to determine if the redirected URL has been downloaded. Alternatively, if a determination is made at block 507 that a HTML redirect has not occurred within the predetermined time interval, then at block 508, the click thru URL is stored in the database 122 or the online content collection server 123 and matched with the appropriate creative. Once the click thru URL is stored in the database 122 or the online content collection server 123, the online content collection server 123 proceeds to block 505 where download and storage of the click thru URL is completed. Referring to Figures 3 and 5, the valid click thru URL stored based on block 508 or determined as being invalid based on block 504 may be used at block 304 to determine whether the online content collection server 123 recognize the associated click thru URL.

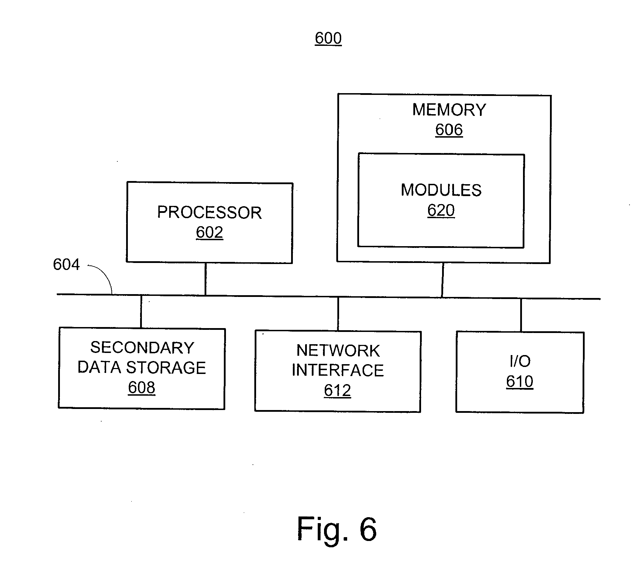

Figure 6 shows a computer system 600 that may be used with the examples described herein. The computer system represents a generic platform that includes components that may be in a server or another computer system. The computer system may be used as a platform for the system 120. The computer system may execute, by a processor or other hardware processing circuit, the methods, functions and other processes described herein. These methods, functions and other processes may be embodied as machine readable instructions stored on a computer readable medium, which may be non-transitory, such as hardware storage devices (e.g., RAM (random access memory), ROM (read only memory), EPROM (erasable, programmable ROM), EEPROM (electrically erasable, programmable ROM), hard drives, and FLASH memory).

The computer system includes a processor 602 that may implement or execute machine readable instructions performing some or all of the methods, functions and other processes described herein. Commands and data from the processor 602 are communicated over a communication bus 604. The computer system also includes a main memory 606, such as a random access memory (RAM), where the machine readable instructions and data for the processor 602 may reside during runtime, and a secondary data storage 608, which may be nonvolatile and stores machine readable instructions and data. The memory and data storage are examples of computer readable mediums. The memory 606 may include modules 620 including machine readable instructions residing in the memory 606 during runtime and executed by the processor 602. The modules 620 may include the module 124 of the system shown in Figure 2, and other components of the system 120, such as the online content collection server 123.

The computer system may include an I/O device 610, such as a keyboard, a mouse, a display, etc. The computer system may include a network interface 612 for connecting to a network. Other known electronic components may be added or substituted in the computer system.

What has been described and illustrated herein is an example along with some of its variations. The terms, descriptions and figures used herein are set forth by way of illustration only and are not meant as limitations. Many variations are possible within the spirit and scope of the subject matter, which is intended to be defined by the following claims -- and their equivalents -- in which all terms are meant in their broadest reasonable sense unless otherwise indicated.

## Claims

1. An online content collection system comprising:
a scanning server to scan web sites to retrieve a potential creative uniform resource locator (URL), wherein the scanning and retrieving comprises:
parsing web pages for the web sites,
identifying a potential creative URL from the parsed web pages that matches a predetermined criterion for retrieving potential creative URLs, and
retrieving the potential creative URL that matches the predetermined criterion;
data storage storing creative URLs; and
an online content collection server analyzing the retrieved potential creative URL, wherein the analysis comprises:
determining whether the retrieved potential creative URL has been seen before by comparing the retrieved potential creative URL against the creative URLs stored in the data storage, and
determining whether the retrieved potential creative URL points to a creative if the retrieved potential creative URL has been seen before.

2. The online content collection system of claim 1, wherein the predetermined criterion includes using a regular expression to match the potential creative URL.

3. The online content collection system of claim 1 or 2,
wherein the analysis further comprises removing query parameters before determining whether the retrieved potential creative URL has been seen before; and
wherein the analysis may further comprise downloading a creative that the retrieved potential creative URL points to if the retrieved potential creative URL has not been seen before.

4. The online content collection system of any one of the preceding claims,
wherein if the retrieved potential creative URL points to a creative, the analysis further comprises determining whether the online content collection server recognizes a click thru URL associated with the creative; and/or
wherein if the retrieved potential creative URL does not point to a creative, the analysis further comprises determining whether the retrieved potential creative URL with query parameters has been seen before.

5. The online content collection system of claim 4,
wherein if the online content collection server does not recognize the click thru URL associated with the creative, the analysis further comprises:
determining whether web page content associated with the creative includes a click thru URL.

6. The online content collection system of claim 5, wherein if the web page content associated with the creative includes a click thru URL, the analysis further comprises:
downloading the click thru URL in a web browser environment; and
determining whether the click thru URL is a redirected URL.

7. The online content collection system of any one of the preceding claims,
wherein the analysis further comprises determining whether the retrieved potential creative URL is a redirected URL if the retrieved potential creative URL has not been seen before; and
wherein the analysis may comprise:
- determining whether the redirected URL has been seen before if the retrieved potential creative URL is a redirected URL;
- indicating the creative associated with the retrieved potential creative URL as being invalid if the redirected URL has been seen before; and
- downloading a subsequent redirected URL to determine whether the subsequent redirected URL is another redirected URL if the redirected URL has not been seen before.

8. The online content collection system of claim 7, wherein the analysis further comprises:
determining whether a creative associated with the retrieved potential creative URL is a FLASH object or an image if the retrieved potential creative URL is not a redirected URL;
determining whether a width and a height of the FLASH object or the image exceed a predetermined threshold if the creative associated with the retrieved potential creative URL is a FLASH object or an image; and
indicating the creative associated with the retrieved potential creative URL as being invalid if the creative associated with the retrieved potential creative URL is not a FLASH object or an image;
wherein the predetermined threshold may be 5 pixels.

9. The online content collection system of claim 8, wherein the analysis further comprises:
indicating the creative associated with the retrieved potential creative URL as being valid if the width and the height of the FLASH object or the image exceed the predetermined threshold; and
storing the retrieved potential creative URL in the data storage for comparison with further retrieved potential creative URLs.

10. The online content collection system of claim 8 or 9, wherein the analysis further comprises:
determining whether the redirected URL has been seen before if the click thru URL is a redirected URL;
indicating the click thru URL as being invalid if the redirected URL has been seen before; and
downloading a subsequent redirected URL to determine whether the subsequent redirected URL is another redirected URL if the redirected URL has not been seen before.

11. The online content collection system of claim 10, wherein the analysis further comprises:
determining whether the click thru URL is a HTML redirect if the click thru URL is not a redirected URL;
storing the click thru URL in the data storage if the click thru URL is not a HTML redirect; and
determining whether the HTML redirect has been seen before if the click thru URL is a HTML redirect.

12. A method for online content collection, the method comprising:
scanning web sites to retrieve a potential creative uniform resource locator (URL);
retrieving the potential creative URL that matches a predetermined criterion for retrieving potential creative URLs;
determining whether the retrieved potential creative URL has been seen before by comparing the retrieved potential creative URL against previously validated creative URLs; and
determining, by a processor, whether the retrieved potential creative URL points to a creative if the retrieved potential creative URL has been seen before.

13. The method of claim 12,
further comprising downloading a creative that the retrieved potential creative URL points to if the retrieved potential creative URL has not been seen before; and
optionally comprising:
- determining whether the retrieved potential creative URL is a redirected URL if the retrieved potential creative URL has not been seen before;
- determining whether the redirected URL has been seen before if the retrieved potential creative URL is a redirected URL;
- indicating the creative associated with the retrieved potential creative URL as being invalid if the redirected URL has been seen before; and
- downloading a subsequent redirected URL to determine whether the subsequent redirected URL is another redirected URL if the redirected URL has not been seen before.

14. The method of claim 13, further comprising:
determining whether a creative associated with the retrieved potential creative URL is a FLASH object or an image if the retrieved potential creative URL is not a redirected URL;
determining whether a width and a height of the FLASH object or the image exceed a predetermined threshold if the creative associated with the retrieved potential creative URL is a FLASH object or an image; and
indicating the creative associated with the retrieved potential creative URL as being invalid if the creative associated with the retrieved potential creative URL is not a FLASH object or an image.

15. A non-transitory computer readable medium including computer code that when executed by a computer system performs instructions to carry out a method according to any one of claims 12 to 14.
